# EUROPEAN PATENT SPECIFICATION

(11) **EP 0 633 567 B1**
(45) Date of publication and mention of the grant of the patent: **28.01.1998**
(21) Application number: 93118137.4
(22) Date of filing: 09.11.1993
(51) Int. Cl.: G11B 15/28, H02K 5/26, G11B 15/26, G11B 15/675

(54) **Capstan motor suspension**
Motoraufhängung für Antriebsrolle
Suspension de moteur de cabestan

(30) Priority: 08.07.1993 US 88782
(43) Date of publication of application: 11.01.1995
(73) Proprietor: TANDBERG DATA A/S, 0808 Oslo 8 (NO)
(72) Inventor: Engan, Bjorn, N-0665 Oslo (NO)
(74) Representative: Goddar, Heinz J., Dr.

(56) References cited:
- EP-A- 0 061 766
- EP-A- 0 109 154
- EP-A- 0 110 585
- US-A- 3 698 615
- US-A- 4 085 906
- US-A- 4 199 092

## Description

### SPECIFICATION

### BACKGROUND OF THE INVENTION

The present invention relates to a magnetic tape recorder having a tape drive bridge arranged for movement toward and away from a magnetic tape cassette loaded in the recorder, the tape drive bridge carrying the tape drive motor and a magnetic head, the motor having a drive capstan arranged coaxially thereon and the cassette having a cassette roller and drive belt arrangement for turning the cassette reels, the cassette roller being in rolling contact with said capstan when the tape drive bridge is moved toward said magnetic tape cassette, and said magnetic head engaging the magnetic tape for reading/writing magnetic signals.

It is an important consideration that when the drive capstan rollingly engages and abuts the cassette roller that the surfaces of the two rollers are not skewed or tilted toward each other, in other words, that the axis of the drive capstan is parallel to the axis of the cassette roller, in this case both vertically aligned.

Further, the system should be capable for easy mounting and dismounting of the motor. In known arrangements where the capstan and cassette roller are brought together for abutting relationship, the capstan can be inadvertently tilted from the vertical axis compared to the vertical axis of the cassette roller, resulting in undesirable wear on the rolling parts, as well as imprecise performance.

In the document EP-A-0 109 154, delimiting the two part form of claim 1, a system is disclosed in which a capstan drive motor is mounted to a frame. Pins that are extending from opposite sides of the motor, and that are diametrically arranged with respect thereto, are rotatably supported within recesses formed in portions of the frame. However, the cited document does not teach how to mount or to dismount the motor. Additionally, to provide a tension force of the drive capstan against the cassette roller a spring element is required.

Further, in the document US-A-4 085 906 a support system for a drive motor within a tape drive is disclosed that provides an attachment bracket including a cylindrical aperture into which the drive motor is inserted. The diameters of the cylindrical aperture and of the motor are dimensioned, such that the motor can be tilted in order to induce an improved attachment of the cassette capstan and the drive roller. In order to support the motor a biasing arrangement is provided that acts on the attachment bracket. Thus, a quite complicated structure is needed to support the motor, and, thus, in particular mounting and dismounting of the motor is quite complicated.

### SUMMARY OF THE INVENTION

The invention is defined in claim 1.

In a magnetic tape recorder, a motor mount arrangement is provided between a tape drive and a tape drive bridge, the bridge disposed for movement toward and away from a magnetic tape cassette loaded in the read/write unit for causing the engagement between a drive capstan mounted coaxially on an output shaft of the motor and a cassette roller held rotatably within the tape cassette for progressing the magnetic tape from reel to reel, wherein the motor support arrangement comprises a pivotable or swivel support between the motor and the bridge allowing the motor output shaft axis to tilt about a line perpendicular to the axis, tilting the axis toward or away from the cartridge roller. The axis of swivel is approximately perpendicular to the approaching direction of the drive capstan toward the cassette roller.

The support arrangement comprises an approximately circular aperture formed through the bridge, having diametrically opposed dimples formed in side walls thereof, and the motor having semi-spherical buttons formed on opposite sides thereof in registry with the dimples. At least one of the dimples is formed on a flexible finger portion which partially defines the circular aperture, the flexible finger portion movable toward and away from a center line of said aperture in an approximate radial direction, to release the buttons from the dimples for removal or installation of the motor within the aperture. The flexible finger portion is biased toward the center line of the aperture by a plastic bushing arranged on a backside of the flexible finger portion between the flexible finger portion and a more rigid portion of the bridge.

The buttons are arranged on a horizontal axis approximately perpendicular to the approaching direction of the motor, and the motor capstan, toward the cassette roller, or at least the axis is approximately perpendicular to a tangent line of the swinging arc of the bridge near to the point of contact between the cassette roller and the motor capstan.

### BRIEF DESCRIPTION OF THE DRAWINGS

Figure 1 is a partially schematic, plan view of a read/write unit with cassette with a top portion of the unit removed.

Figure 2 is a bottom plan view of a portion of the unit shown in Figure 1.

Figure 3 is a partial sectional view taken generally along line III-III of Figure 2.

Figure 4 is a partial elevational view of the motor/drive capstan/cartridge roller arrangement of the present invention.

### DETAILED DESCRIPTION OF THE PREFERRED EMBODIMENTS

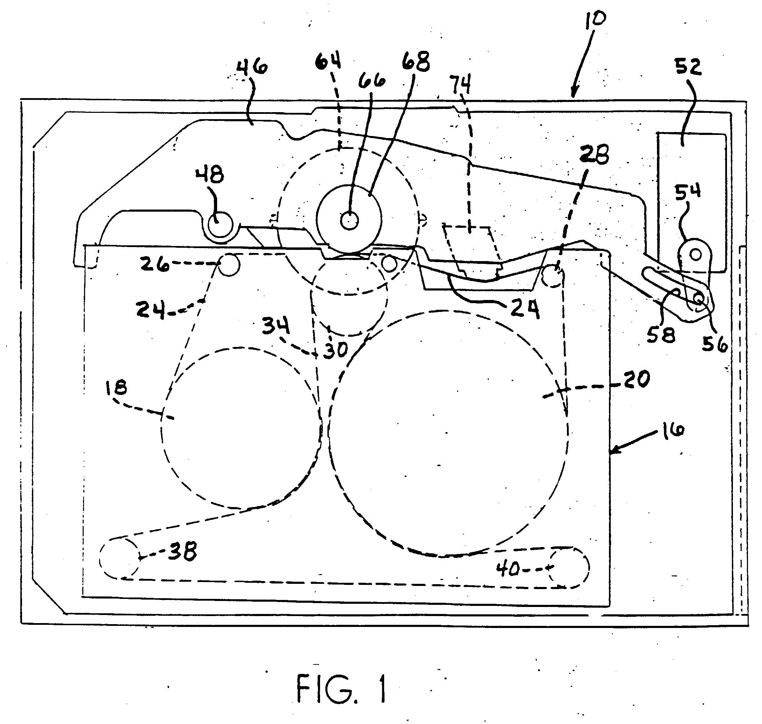

Figure 1 illustrates a magnetic tape recorder 10 holding a magnetic tape cassette 16 therein. The magnetic tape cassette 16 comprises a first tape spool 18, a second tape spool 20, a supply of magnetic tape 24 wrapped around the spools and two guide rollers 26,28. The cassette also provides a cassette roller 30 having a belt 34 wrapped around the cassette roller and a first and second belt rollers 38, 40 arranged at approximately the corners of the cassette 16. When the cassette roller 30 is rotated about its axis, the belt 34 is circulated around the cassette roller 30 and the belt rollers 38, 40. Because the belt is partially wrapped around the spools 18, 20, the circulation of the belt causes, by friction, rotation of the spools and circulation of the magnetic tape 24. The described construction of the magnetic tape cassette is known.

The read/write unit 10 includes a bridge 46 which is an elongate member rotatable about a pin means 48 under influence of a gear control means 52 shown as a schematic box for simplicity. The gear control means 52 provides a rotating lever arm 54 which provides a pin 56 held in a slot 58 arranged formed through the bridge 46 at a distance from the pin means 48. Rotation of the lever 54 progresses the pin 56 through the slot 58 and exerts a force onto the bridge 46 which creates a moment about the pin means 48. This force pivots the bridge 46 about the pin means 48. Mounted for movement with the bridge 46 is a motor 64 having an output shaft 66 arranged generally vertically.

A capstan 68 is mounted coaxially with the output shaft 66 and fixed thereto for rotation. A magnetic head 74 is also mounted for movement with the bridge 46. Thus, the gear control 52 can pivot the bridge to move the capstan 68 into rolling abutting engagement with the cassette roller 30, and move the magnetic read/write head 74 into contact with the magnetic tape 24.

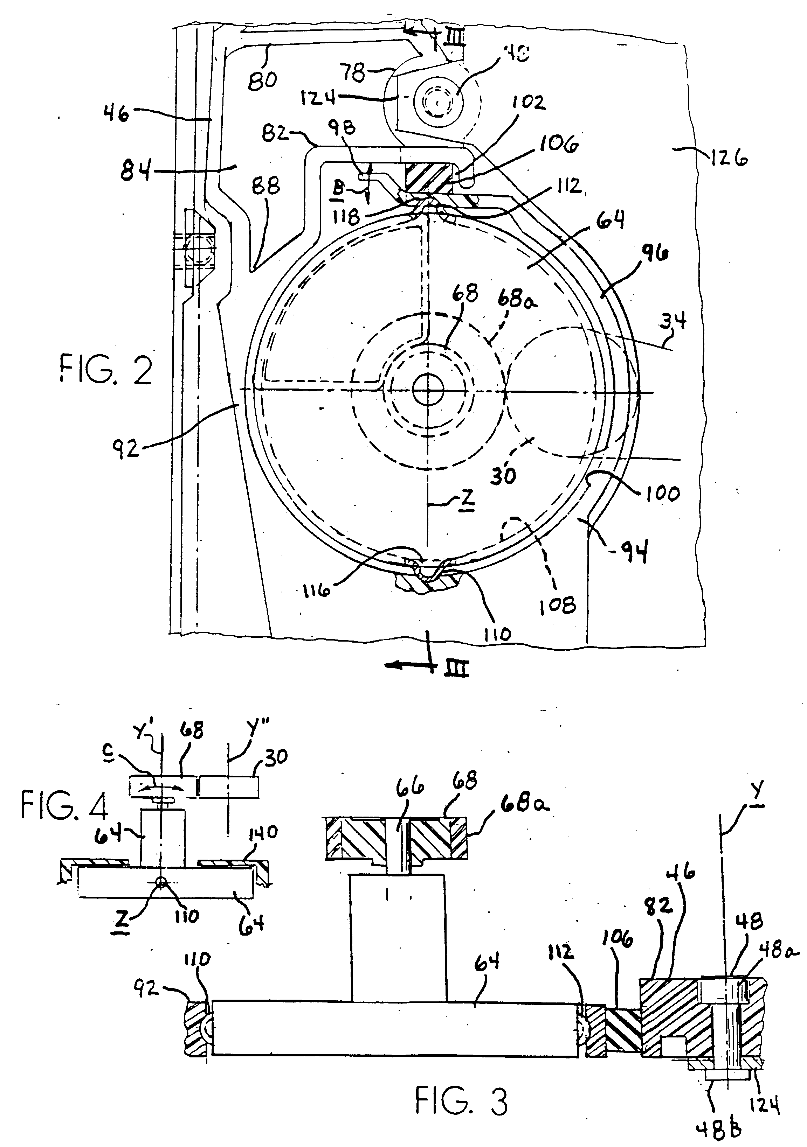

Figure 2 illustrates the manner in which the motor is supported on the bridge 46. The bridge comprises a relatively rigid lattice-type frame having a journal portion 78 surrounding the pin means 48, and rigidly connected thereto are divergent leg portions 80, 82 which provide a space 84 therebetween which can house other components of the read/write unit 10. The leg portions 80, 82 merge together at an intersection 88. A rigid portion 92 of the bridge continues from the intersection 88 for approximately 180° around the circumference of the motor 64 to a location 94. From the location 94, a flexible finger portion 96 continues around counterclockwise of the motor shown in Figure 2 and terminates in a free end 98. The leg portion 82, the rigid portion 92 and the flexible finger portion 96 define substantially a circular aperture 100 wherein the motor is located. The leg portion 82 and the flexible finger portion 96 overlap to define a space 102 therebetween wherein an elastomeric bushing 106 is installed. A side wall 108 of the motor 64 provide two semi-spherical buttons 110, 112 which protrude outwardly and are diametrically opposed across the motor. The buttons 110, 112 interfit at least partially in dimples 116, 118 arranged in the rigid portion 92 and the flexible finger portion 96 respectively. The flexible finger portion 96, by way of its natural cantilever resiliency and/or the backing of the bushing 106, resiliently holds the buttons 110, 112 within the dimples 116, 118. Because the buttons 110, 112 are semi-spherical and the dimples 116, 118 are also semi-spherical, the buttons can rotate within the dimples 116, 118 about an axis Z.

Figure 3 illustrates in cross section the fitment of the motor 64 between the rigid portion 92 and the flexible finger portion 96 via the spherical buttons 110, 112. Additionally, Figure 3 illustrates that the capstan 68 provides a frictional outside layer 68a, such as a rubber covering for advantageous friction with the cassette roller 30. The pin means 48 is shown as an elongate rivet having a head 48a and an expanded rivet tail 48b which captures the bridge 46 rotatably onto a tab 124 of a stationary bottom cover plate 126 of the read/write machine 10.

Figure 4 illustrates that the motor 64 is pivotable according to the arcuate direction C toward and away from the cassette roller 30. Thus, the combination of pivoting about the Z axis and the rotating by the bridge about the Y axis, brings the capstan 68 in proper compatible axial parallelism with the cartridge roller 30, i.e., the axis Y' is parallel to the axis Y''.

An overlying resilient cover 140 provides a resilient downward force on the motor 64 to counterbalance the counterclockwise moment about the Z axis on the motor 64 caused by the cassette roller 30 exerting a force on the capstan 68.

The flexible finger portion 96 can be moved at its distal end 98 in the direction B to increase or decrease the clear distance between the flexible finger portion dimple 118 and the base portion dimple 116 to install or remove the motor 64. The bushing 106 also aids in dampening vibration from the motor or to the motor to/from other elements of the read/write unit.

Although the present invention has been described with reference to a specific embodiment, those of skill in the art will recognize that changes may be made thereto without departing from the scope of the invention as set forth in the appended claims.

## Claims

1. A magnetic tape recorder (10) having a tape drive bridge (46) disposed for movement toward and away from a magnetic tape cassette (16) loaded in said recorder (10), said tape drive bridge (46) also carrying a magnetic head (74) and a tape drive motor (64) driving a drive capstan (68), a support assembly for said tape drive motor (64), comprising:
first support means (110, 112) arranged on said tape drive motor (64);
second support means (116, 118) arranged on said tape drive bridge (46), engaging said first support means (110, 112);
wherein one said first and second support means comprises a protuberance (110, 112) and the respective other of said first and second support means comprises a journal (116, 118) for holding said protuberance (110, 112);
characterized in that
said second support means (116, 118) being at least partially arranged on a flexible portion (96, 98) of said bridge (46), the selective flexing of which releases said first support means (110, 112) from engagement with said second support means.

2. A magnetic tape recorder (10) according to claim 2, wherein said flexible portion (96, 98) is arranged on said bridge (46) opposite a more rigid portion (92) of said bridge (46) and an elastomeric (106) element is arranged therebetween to bias said flexible portion (96, 98) toward said motor (64).

3. A magnetic tape recorder (10) according to claim 1 or 2, wherein said flexible portion (96, 98) comprises an arcuate finger partially circumscribing a circumference of said motor (64).

4. A magnetic tape recorder (10) according to one of the preceding claims, wherein said first support means (110, 112) comprises spherical protuberances and said second support means (116, 118) comprises spherical cavities holding said spherical protuberances.

5. A magnetic tape recorder (10) according to one of the preceding claims, wherein flexing of said flexible portion (96, 98) releases at least one of said protuberances (112) from one of said cavities (118).

6. A magnetic tape recorder (10) according to one of the preceding claims with
said first support means (110, 112) arranged on said tape drive motor (64) at positions in diametrical opposition;
said second support means (116, 118) arranged for allowing said tape drive motor (64) to pivot about an axis (Z) defined between said first support means (110, 112).

7. A magnetic tape recorder (10) according to claim 6, wherein said first support means (110, 112) comprises raised buttons on said tape drive motor (64) extending radially outwardly; and
said second support means (116, 118) comprises recesses formed in said bridge (46), said raised buttons in registry with said recesses.

8. A magnetic tape recorder (10) according to claim 6 or 7, wherein said raised buttons (110, 112) comprise partial spheres and said recesses (116, 118) comprise partial spherical cavities.

9. A magnetic tape recorder (10) according to one of the claims 6 to 8, wherein said second support means (116, 118) is arranged on a flexible portion (96, 98) of said bridge (46) which is diametrically flexible toward and away from said first support means (110, 112), allowing disengagement of said first support means (110, 112) from said second support means (116, 118) upon flexure of said flexible portion (96, 98).

10. A magnetic tape recorder (10) according to one of the claims 6 to 9, wherein said flexible portion (96, 98) is arranged adjacent a non-flexible portion (82) of said bridge (46), and a resilient member (106) is interfit therebetween, flexure of said flexible portion (96, 98) influenced by the resiliency of said resilient member (106).

11. A magnetic tape recorder (10) according to one of the claims 6 to 10, wherein said resilient member (106) comprises an elastomeric bushing.

12. A magnetic tape recorder (10) according to claim 6, wherein said bridge (46) provides a substantially circular aperture and said motor (64) comprises a substantially circular profile and is interfit closely within said substantially circular aperture, and partially defining said substantially circular aperture is an arcuate flexible finger portion (96, 98) of said bridge (46), and said second support means (116, 118) is arranged at least partially on said flexible finger portion (96, 98).

13. A magnetic tape recorder (10) according to claim 12, wherein said bridge (46) comprises a relatively rigid portion (82) arranged between a pivot point (Y) of said bridge (46) and said flexible finger portion (96, 98), and a plastic bushing (106) arranged between said rigid portion (82) and said flexible finger portion (96, 98).

14. A magnetic tape recorder (10) according to claim 13, wherein said pivot point (Y) of said bridge (46), said elastomeric bushing (106), and said first and second support means (110, 112, 116, 118) are arranged substantially in a line (Z).

## Patentansprüche

1. Magnetbandrekorder (10), der eine Laufwerksbrücke (46) aufweist, die für eine Bewegung in Richtung auf und weg von einer Magnetbandkassette (16), die in den Rekorder (10) eingelegt ist, angeordnet ist, wobei die Laufwerksbrücke (46) auch einen Magnetkopf (74) und einen Laufwerksmotor (64), der eine Antriebsrolle (68) antreibt, einen Halteaufbau für den Laufwerksmotor (64) trägt, der umfaßt:
Erste Haltevorrichtungen (110, 112), die an dem Laufwerksmotor (64) angeordnet sind;
zweite Haltevorrichtungen (116, 118) die an der Laufwerksbrükke (46) angeordnet sind und die mit den ersten Haltevorrichtungen (110, 112) in Eingriff stehen;
wobei eine der ersten und zweiten Haltevorrichtungen eine Ausstülpung (110, 112) umfaßt und die entsprechende andere der ersten und zweiten Haltevorrichtungen einen Lagerzapfen (116, 118) zum Halten der Ausstülpung (110, 112) umfaßt;
dadurch gekennzeichnet, daß
die zweiten Haltevorrichtungen (116, 118) wenigstens teilweise an einem flexiblen Bereich (96, 98) der Brücke (46) angeordnet sind, wobei dessen selektives Nachgeben die ersten Haltevorrichtungen (110, 112) von dem Eingriff mit den zweiten Haltevorrichtungen freigibt.

2. Magnetbandrekorder (10) nach Anspruch 2, wobei der flexible Bereich (96, 98) an der Brücke (46) gegenüber einem steiferen Bereich (92) der Brücke (46) angeordnet ist und ein Elastomerelement (106) zwischen diesen angeordnet ist, um den flexiblen Bereich (96, 98) in Richtung auf den Motor (64) vorzuspannen.

3. Magnetbandrekorder (10) nach Anspruch 1 oder 2, wobei der flexible Bereich (96, 98) einen bogenartigen Finger umfaßt, der einen Umfang des Motors (64) teilweise umschreibt.

4. Magnetbandrekorder (10) nach einem der vorhergehenden Ansprüche, wobei die erste Haltevorrichtungen (110, 112) sphärische Ausstülpungen umfassen und die zweiten Haltevorrichtungen (116, 118) sphärische Hohlräume umfassen, die die sphärischen Ausstülpungen halten.

5. Magnetbandrekorder (10) nach einem der vorhergehenden Ansprüche, wobei ein Nachgeben des flexiblen Bereiches (96, 98) wenigstens eine der Ausstülpungen (112) von einem der Hohlräume (118) loslöst.

6. Magnetbandrekorder (10) nach einem der vorhergehenden Ansprüche mit
den ersten Haltevorrichtungen (110, 112) die an dem Laufwerksmotor (64) an Positionen in einer diametralen Gegenstellung angeordnet sind;
den zweiten Haltevorrichtungen (116, 118) die so angeordnet sind, daß der Laufwerksmotor (64) um eine Achse (Z), die zwischen den ersten Haltevorrichtungen (110, 112) definiert ist, drehen kann.

7. Magnetbandrekorder (10) nach Anspruch 6, wobei die ersten Haltevorrichtungen (110, 112) angehobene Knöpfe an dem Laufwerksmotor (64) umfassen, die sich radial nach außen erstrekken; und
die zweiten Haltevorrichtungen (116, 118) Aussparungen umfassen, die in die Brücke (46) eingeformt sind, wobei die angehobenen Knöpfe in Paßgenauigkeit mit den Aussparungen sind.

8. Magnetbandrekorder (10) nach Anspruch 6 oder 7, wobei die angehobenen Knöpfe (110, 112) Teilsphären umfassen und die Aussparungen (116, 118) sphärische Teilvertiefungen umfassen.

9. Magnetbandrekorder (10) nach einem der Ansprüche 6 bis 8, wobei die zweiten Haltevorrichtungen (116, 118) an einem flexiblen Bereich (96, 98) der Brücke (46), die diametral flexibel in Richtung auf und weg von den ersten Haltevorrichtungen (110, 112) ist, angeordnet sind, wobei ein Entkuppeln der ersten Haltevorrichtungen (110, 112) von den zweiten Haltevorrichtungen (116, 118) bei einem Nachgeben des flexiblen Bereiches (96, 98) erlaubt wird.

10. Magnetbandrekorder (10) nach einem der Ansprüche 6 bis 9, wobei der flexible Bereich (96, 98) angrenzend an einen nicht flexiblen Bereich (82) der Brücke (46) angeordnet ist, und ein elastisches Element (106) zwischen diesen eingepaßt ist, wobei ein Nachgeben des flexiblen Bereiches (96, 98) durch die Elastizität des elastischen Elementes (106) beeinflußt ist.

11. Magnetbandrekorder (10) nach einem der Ansprüche 6 bis 10, wobei das elastische Element (106) eine Elastomerbuchse umfaßt.

12. Magnetbandrekorder (10) nach Anspruch 6, wobei die Brücke (46) eine im wesentlichen kreisförmige Öffnung zur Verfügung stellt, und der Motor (64) ein im wesentliches kreisförmiges Profil umfaßt und eng innerhalb der im wesentlichen kreisförmigen Öffnung eingepaßt ist, und wobei es einen bogenförmigen, flexiblen Fingerbereich (96, 98) der Brücke (46) gibt, der teilweise die im wesentlichen kreisförmige Öffnung definiert, und wobei die zweiten Haltevorrichtungen (116, 118) wenigstens teilweise an dem flexiblen Fingerbereich (96, 98) angeordnet sind.

13. Magnetbandrekorder (10) nach Anspruch 12, wobei die Brücke (46) einen relativ steifen Bereich (82) umfaßt, der zwischen einem Drehpunkt (Y) der Brücke (46) und dem flexiblen Fingerbereich (96, 98) angeordnet ist, und wobei eine Kunststoffbuchse (106) zwischen dem steifen Bereich (82) und dem flexiblen Fingerbereich (96, 98) angeordnet ist.

14. Magnetbandrekorder (10) nach Anspruch 13, wobei der Drehpunkt (Y) der Brücke (46), die Elastomerbuchse (106) und die ersten und zweiten Haltevorrichtungen (110, 112, 116, 118) im wesentlichen in einer Linie (Z) angeordnet sind.

## Revendications

1. Enregistreur sur bande magnétique (10) ayant un dispositif, en pont, d'entraînement de bande (46) disposé pour se déplacer en se rapprochant et en s'éloignant d'une cassette de bande magnétique (16) chargée dans ledit enregistreur (10), ledit dispositif, en pont, d'entraînement de bande (46) supportant également une tête magnétique (74) et un moteur d'entraînement de bande (64) entraînant un cabestan d'entraînement (68), un ensemble de support pour ledit moteur d'entraînement de bande (64), comprenant :
des premiers moyens de support (110, 112) disposés sur ledit moteur d'entraînement de bande (64) ;
des seconds moyens de support (116, 118) disposés sur ledit dispositif, en pont, d'entraînement de bande (46), engageant lesdits premiers moyens de support (110, 112) ;
dans lequel les uns desdits premiers et seconds moyens de support comprennent une saillie (110, 112) et les autres respectifs desdits premiers et seconds moyens de support comprennent un axe (116, 118) pour tenir ladite saillie (110, 112) ;
caractérisé en ce que
lesdits seconds moyens de support (116, 118) étant au moins partiellement disposés sur une partie flexible (96, 98) dudit dispositif en pont (46), la flexion sélective de celui-ci libèrent lesdits premiers moyens de support (110, 112) de l'engagement avec lesdits seconds moyens de support.

2. Enregistreur sur bande magnétique (10) selon la revendication 2, dans lequel ladite partie flexible (96, 98) est disposée sur ledit dispositif en pont (46), à l'opposé d'une partie plus rigide (92) dudit dispositif (46), et un élément en élastomère (106) est disposé entre eux pour solliciter ladite partie flexible (96, 98) en direction dudit moteur (64).

3. Enregistreur sur bande magnétique (10) selon la revendication 1 ou 2, dans lequel ladite partie flexible (96, 98) comprend un doigt en arc limitant partiellement une circonférence dudit moteur (64).

4. Enregistreur sur bande magnétique (10) selon l'une des revendications précédentes, dans lequel lesdits premiers moyens de support (110, 112) comprennent des saillies sphériques et lesdits seconds moyens de support (116, 118) comprennent des cavités sphériques maintenant lesdites saillies sphériques.

5. Enregistreur sur bande magnétique (10) selon l'une quelconque des revendications précédentes, dans lequel la flexion de ladite partie flexible (96, 98) libère au moins l'une desdites saillies (112) de l'une desdites cavités (118).

6. Enregistreur sur bande magnétique (10) selon l'une des revendications précédentes, ayant
lesdits premiers moyens de support (110, 112) disposés sur ledit moteur d'entraînement de bande (64) en des positions diamétralement opposées ;
lesdits seconds moyens de support (116, 118) disposés pour permettre audit moteur d'entraînement de bande (64) de pivoter autour d'un axe Z défini entre lesdits premiers moyens de support (110, 112).

7. Enregistreur sur bande magnétique (10) selon la revendication 6, dans lequel lesdits premiers moyens de support (110, 112) comprennent des boutons relevés sur ledit moteur d'entraînement de bande (64) et s'étendant radialement vers l'extérieur ; et
lesdits seconds moyens de support (116, 118) comprennent des évidements formés dans ledit dispositif en pont (46), lesdits boutons relevés étant en correspondance avec lesdits évidements.

8. Enregistreur sur bande magnétique (10) selon la revendication 6 ou 7, dans lequel lesdits boutons relevés (110, 112) comprennent des sphères partielles et lesdits évidements (116, 118) comprennent des cavités sphériques partielles.

9. Enregistreur sur bande magnétique (10) selon l'une des revendications 6 à 8, dans lequel lesdits seconds moyens de support (116, 118) sont disposés sur une partie flexible (96, 98) dudit dispositif en pont (46) qui est diamétralement flexible pour se rapprocher et s'écarter desdits premiers moyens de support (110, 112), permettant le désengagement desdits premiers moyens de support (110, 112) desdits seconds moyens de support (116, 118) lors de la flexion de ladite partie flexible (96, 98).

10. Enregistreur sur bande magnétique (10) selon l'une des revendications 6 à 9, dans lequel ladite partie flexible 96, 98 est disposée en étant contiguë à une partie non flexible (82) dudit dispositif en pont (46), et un élément élastique (106) est intercalé entre eux, la flexion de ladite partie flexible (96, 98) étant influencée par l'élasticité dudit élément élastique (106).

11. Enregistreur sur bande magnétique (10) selon l'une des revendications 6 à 10, dans lequel ledit élément élastique 106 comprend une douille en élastomère.

12. Enregistreur sur bande magnétique (10) selon la revendication 6, dans lequel ledit dispositif en pont (46) présente un ouverture sensiblement circulaire et ledit moteur 64 comprend un profil sensiblement circulaire et est intercalé en ajustement serré à l'intérieur de ladite ouverture sensiblement circulaire, et définissant partiellement ladite ouverture sensiblement circulaire se trouve une partie de doigt flexible en arc (96, 98) du dispositif en pont (46), et lesdits seconds moyens de support (116, 118) sont disposés au moins partiellement sur ladite partie de doigt flexible (96, 98).

13. Enregistreur sur bande magnétique (10) selon la revendication 12, dans lequel ledit dispositif en pont (46) comprend une partie relativement rigide 82 disposée entre un point pivot (Y) dudit dispositif en pont (46) et ladite partie de doigt flexible (97-48), et une douille en plastique (106) disposée entre ladite partie rigide (82) et ladite partie de doigt flexible (96, 98).

14. Enregistreur sur bande magnétique (10) selon la revendication 13, dans lequel ledit point pivot "Y" dudit dispositif en pont (46), ladite douille en élastomère et lesdits premiers et seconds moyens de support (116, 112, 116, 118) sont disposés sensiblement selon une ligne (Z).
